# EUROPÄISCHE PATENTANMELDUNG

(11) **EP 4 712 058 A1**
(43) Veröffentlichungstag der Anmeldung: **18.03.2026**
(21) Anmeldenummer: 25201386.7
(22) Anmeldetag: 10.09.2025
(51) Int. Cl.: G08G 1/017, G08G 1/054, G08G 1/04, F16M 11/04, F16M 11/06, F16M 11/18, F16M 11/20, F16M 11/24

(54) **VERKEHRSÜBERWACHUNGSSYSTEM UND FAHRZEUG**

(30) Priorität: 11.09.2024 DE 102024126106
(71) Anmelder: Jenoptik Robot GmbH, 40789 Monheim (DE)
(72) Erfinder: Neugebauer, Frank, 40789 Monheim am Rhein (DE)
(74) Vertreter: Waldauf, Alexander

(57) **Zusammenfassung**

Die Erfindung betrifft ein Verkehrsüberwachungssystem (100) zur Überwachung einer Verkehrsszene, vorzugsweise von einem Innenraum eines Fahrzeugs (200) aus, aufweisend:
- ein Oberteil (40) umfassend
∘ eine Messeinheit (41), welche eingerichtet ist zum Messen zumindest eines Parameters eines Objekts, insbesondere eines vorbeifahrenden Fahrzeugs,
∘ einen Blitz (42), der beabstandet von einer ersten Seitenwand (41.1) oder einer zweiten Seitenwand (41.2) der Messeinheit (41) anordenbar ist,

- ein Unterteil (20), das unterhalb des Oberteils (40) angeordnet ist,
- eine Positioniereinheit (30), welche zwischen dem Oberteil (40) und dem Unterteil (20) angeordnet ist, wobei das Oberteil (40) relativ zu dem Unterteil (20) durch die Positioniereinheit (30) verstellbar ist, wodurch zumindest zwei unterschiedliche Messkonfigurationen (I, II) zum Messen bereitgestellt werden.
Weiterhin betrifft die Erfindung ein Fahrzeug (200) mit einem Verkehrsüberwachungssystem (100).

## Beschreibung

Die Erfindung betrifft ein Verkehrsüberwachungssystem zur Überwachung einer Verkehrsszene, vorzugsweise von einem Innenraum eines Fahrzeugs aus. Zudem betrifft die Erfindung ein Fahrzeug aufweisend ein derartiges Verkehrsüberwachungssystem.

Bekannt sind Verkehrsüberwachungssysteme, welche eine Messeinheit aufweisen, die zum Messen von zumindest einem Parameter eines Objekts, z. B. eines vorbeifahrenden Fahrzeugs, eingerichtet ist. Dabei kann der zumindest eine Parameter eine Geschwindigkeit, eine Position und/oder einen Abstand (beispielsweise zu vorausfahrenden Fahrzeugen) aufweisen. Dadurch können beispielsweise Geschwindigkeitsverstöße ermittelt werden.

Der Stand der Technik weist dabei Nachteile auf. So kann es vorgesehen sein, dass bekannte Verkehrsüberwachungssysteme nur für den Außenbereich vorgesehen sind, wodurch diese leicht erkennbar sind und/oder nicht geschützt sind, insbesondere vor Umwelteinflüssen (z. B. Regen, Wind, Hitze und/oder Sonne) und/oder äußerer Krafteinwirkung (z. B. Vandalismus, Unfälle und dergleichen). Die Sicherheit, insbesondere beim Fahren mit einem entsprechenden Fahrzeug, kann reduziert sein, wenn derartige Verkehrsüberwachungssysteme (zumindest teilweise) nicht oder nicht korrekt demontiert werden. Zudem können Komfort, Flexibilität, Einfachheit und/oder Transportfähigkeit reduziert sein. Weiterhin können Robustheit, Kosten, Gewicht und/oder Erweiterbarkeit verbesserungswürdig sein.

Es ist daher eine Aufgabe der vorliegenden Erfindung, wenigstens einen der voranstehend beschriebenen Nachteile zumindest teilweise zu überwinden. Insbesondere ist es Aufgabe der Erfindung ein verbessertes Verkehrsüberwachungssystem bereitzustellen, wobei insbesondere Erkennbarkeit, Schutz, Flexibilität, Transportfähigkeit, Robustheit, Kosten, Komfort, Gewicht, Einfachheit und/oder Erweiterbarkeit optimiert sind.

Die voranstehende Aufgabe wird gelöst durch ein Verkehrsüberwachungssystem mit den Merkmalen des unabhängigen Systemanspruchs sowie durch ein Fahrzeug mit den Merkmalen des unabhängigen Fahrzeuganspruchs. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen **Verkehrsüberwachungssystem** beschrieben sind, selbstverständlich auch im Zusammenhang mit dem erfindungsgemäßen Fahrzeug und jeweils umgekehrt, sodass bezüglich der Offenbarung zu den einzelnen Erfindungsaspekten stets wechselseitig Bezug genommen wird bzw. werden kann. Insbesondere gelten Vorteile, die im Rahmen des ersten und/oder zweiten Aspekts beschrieben werden, auch jeweils für den ersten und/oder zweiten Aspekt.

Die obenstehende Aufgabe wird gemäß einem ersten Aspekt gelöst durch ein Verkehrsüberwachungssystem zur Überwachung einer Verkehrsszene, vorzugsweise von einem Innenraum eines Fahrzeugs (gemäß dem zweiten Aspekt) aus, aufweisend:
- ein Oberteil umfassend
   ∘ eine Messeinheit, welche eingerichtet ist zum Messen zumindest eines Parameters eines Objekts, insbesondere eines vorbeifahrenden Fahrzeugs,
   ∘ einen Blitz (Beleuchtungseinheit), der beabstandet von einer ersten Seitenwand oder einer zweiten Seitenwand der Messeinheit anordenbar ist,
- ein Unterteil, das unterhalb des Oberteils angeordnet ist,
- eine Positioniereinheit, welche zwischen dem Oberteil und dem Unterteil angeordnet ist, wobei das Oberteil relativ zu dem Unterteil durch die Positioniereinheit verstellbar ist, wodurch zumindest zwei unterschiedliche Messkonfigurationen zum Messen bereitgestellt werden.

Das Verkehrsüberwachungssystem kann vorzugsweise eingerichtet sein für eine Anordnung (z. B. Verschrauben) und/oder Montage im Innenraum eines Fahrzeugs, insbesondere im Kofferraum. Dabei kann insbesondere die Basis im Fahrzeug befestigt werden, insbesondere auf einer horizontalen (Holz-) Platte im Kofferraum. Dabei kann das Verkehrsüberwachungssystem von einem Innenraum (z. B. Kofferraum) des Fahrzeugs aus, ein Messen durchführen. Dies kann die Sicherheit und/oder den Schutz (z. B. vor Vandalismus) verbessern. Auch die Erkennbarkeit kann verbessert werden, insbesondere kann das Verkehrsüberwachungssystem schwerer von vorbeifahrenden Fahrzeugen bzw. den Fahrern erkannt werden. Vorzugsweise kann das Verkehrsüberwachungssystem, z. B. im Kofferraum, zumindest zwei (sich unterscheidende) Messkonfigurationen einnehmen, bevorzugt um ein Messen aus dem Seitenfenster/entlang der Seitenrichtung oder dem Heckfenster/entgegen (oder entlang) der Longitudinalrichtung zu ermöglichen.

Im Rahmen der Erfindung kann (zur Beschreibung von Orientierung und/oder Richtung) ein Rechthandsystem verwendet werden. Dabei kann eine Longitudinalrichtung entlang der Fahrtrichtung eines Fahrzeugs weisen, eine Seitenrichtung von rechts nach links (in Fahrtrichtung) und eine Vertikalrichtung von unten nach oben (vom Boden in Richtung Himmel), wobei die Longitudinalrichtung, die Seitenrichtung und die Vertikalrichtung ein Rechthandsystem bilden. In der zweiten Messkonfiguration kann das Verkehrsüberwachungssystem vorzugsweise entgegen (oder entlang) der Longitudinalrichtung ausgerichtet sein, wobei insbesondere ein Messen aus einem Heckfenster (bei Montage im Fahrzeug) ermöglicht werden kann. Demnach können sich entsprechende Beschreibungen auf ebendiese Konfiguration beziehen.

Das Oberteil kann, insbesondere über die Positioniereinheit, mit dem Unterteil verstellbar, fixierbar und/oder beweglich verbunden sein. Dadurch kann die Flexibilität, Robustheit und/oder Einfachheit verbessert werden. Im einfachsten Fall kann die Positioniereinheit als Kugelgelenk ausgestaltet sein. Eine äquivalente Ausführung zum Kugelgelenk wäre eine separate Einstellung in alle Achsen (x,y,z) bzw. in alle Winkel mittels handelsüblichen Verstelleinheiten von Stativen (Stativverstelleinheit) für den Bereich der Fotografie bzw. Videotechnologie z.B. mittels Kurbeln und/oder Spindeln.

Die eine Messeinheit (oder auch mehrere unterschiedliche Messeinheiten), welche eingerichtet ist zum Messen zumindest eines Parameters eines Objekts, insbesondere eines vorbeifahrenden Fahrzeugs, kann an einem oberen Ende des Oberteils angeordnet (z. B. verschraubt) sein, beispielsweise an und/oder auf einer (voluminösen, z. B. nach vorne offenen quaderförmigen) Trägerstruktur, insbesondere einer Trägerplatte (verschraubt). Die Messeinheit kann im einfachsten Fall eine (im Wesentlichen) quaderförmige Form aufweisen. Die Messeinheit kann eine erste Seitenwand aufweisen, welche bevorzugt neben und/oder (bezogen auf eine Longitudinalrichtung und/oder zweite Messkonfiguration) rechts (oder oben) an der Messeinheit angeordnet ist. Die Messeinheit kann eine zweite Seitenwand aufweisen, welche bevorzugt neben und/oder (bezogen auf eine Longitudinalrichtung und/oder zweite Messkonfiguration) links (oder unten) an der Messeinheit angeordnet ist. Bevorzugt sind die erste und zweite Seitenwand auf einer gegenüberliegenden Seite der Messeinheit und/oder der Trägerstruktur angeordnet. Die Messeinheit kann ein RADAR, LIDAR und/oder 3D-LIDAR aufweisen, welches zum Messen des zumindest einen Parameters (z. B. Geschwindigkeit und/oder Position bzw. Abstand des Objekts) eingerichtet ist. Das Oberteil, insbesondere die Messeinheit, kann eine Kamera aufweisen, welche insbesondere zeitgleich mit dem Blitz ausgelöst werden kann. Dadurch kann ein Beweisfoto oder ein Video bereitgestellt werden.

Der Blitz kann beabstandet von einer ersten Seitenwand und/oder einer zweiten Seitenwand der Messeinheit anordenbar (bzw. angeordnet) sein, wobei der Blitz vorzugsweise in einer horizontalen Ebene, welche insbesondere durch eine Longitudinalrichtung und eine Seitenrichtung aufgespannt wird, bzw. entlang der Seitenrichtung bezogen auf die zweite Messkonfiguration, (wahlweise) rechts oder links angeordnet werden kann, was insbesondere die (Gesamt-)Höhe reduzieren kann. Alternativ ist auch eine Anordnung oberhalb oder unterhalb (bezogen auf die Vertikalrichtung) der Messeinheit denkbar, was vorteilhafterweise die Breite reduzieren kann. Somit kann das Verkehrsüberwachungssystem flexibel an eine vorgegebene Bauraumgröße und/oder Bauraumform, z. B. eines Kofferraums, angepasst werden.

Das Unterteil, das / welches (bezogen auf die Vertikalrichtung) unterhalb des Oberteils angeordnet ist, kann beispielsweise quaderförmig und/oder zylindrisch ausgestaltet sein. Das Unterteil kann an seinem unteren Ende eine (z. B. quadratische) Platte aufweisen. Dies kann eine vorteilhafte Verbindung mit der Gegenschiene (siehe unten) ermöglichen, welche am unteren Ende, insbesondere der Platte, des Unterteils angeordnet (insbesondere [stoffschlüssig] befestigt oder verschraubt) sein kann. Die Platte kann beispielsweise eine Fläche (senkrecht zur Vertikalrichtung) von etwa 100 cm² aufweisen. Dadurch (bzw. bei einer noch größeren Größe) kann eine große Stabilität und/oder Genauigkeit (der Positionierung und/oder Verstellung) erzielt werden, insbesondere wenn die Gegenschiene in einer darunterliegenden Schiene bewegt wird und/oder ein Wechsel zwischen den zumindest zwei Messkonfigurationen durchgeführt wird. Gleichzeitig kann ein großer Spielraum bei der Positionierung über die Gegenschiene bereitgestellt werden.

Die Positioniereinheit, welche zwischen dem Oberteil und dem Unterteil angeordnet ist und diese insbesondere flexibel verbindet, wobei das Oberteil relativ zu dem Unterteil durch die Positioniereinheit (reversibel und/oder flexibel) verstellbar ist, kann (dadurch) zumindest zwei unterschiedliche Messkonfigurationen (z. B. eine erste und eine zweite Messkonfiguration) zum Messen bereitstellen. Im einfachsten Fall kann die Positioniereinheit als Kugelgelenk (umfassend eine Kugel, die an dem Oberteil befestigt ist und eine Kugelpfanne, die an dem Unterteil befestigt ist [oder umgekehrt]) bzw. als Stativverstelleinheit ausgestaltet sein. Die Positioniereinheit kann dafür eingerichtet sein, das Oberteil relativ zu dem Unterteil zu verschwenken und/oder verdrehen. Dadurch kann über die Positioniereinheit wahlweise zwischen zumindest zwei Messkonfigurationen gewählt werden, wobei vorteilhafterweise (nicht zwangsläufig) weitere Veränderungen vorgenommen werden können, insbesondere ein Austarieren (in die Waagerechte, ähnlich einer Wasserwaage und/oder ein Ausrichten von Messeinheit und Blitz [gleichzeitig]). Beispielsweise kann durch ein Verschwenken um 90° zwischen einer ersten Messkonfiguration und einer zweiten Messkonfiguration gewechselt werden. Dies kann einen besonders schnellen Wechsel zwischen den Messkonfigurationen ermöglichen. Besonders bevorzugt kann es jedoch (alternativ oder zusätzlich) vorgesehen sein, eine Verstellbarkeit über die Gegenschiene (und eine entsprechende erste, zweite, dritte und/oder vierte Schiene) durchzuführen, wodurch vorteilhafterweise (ebenfalls) ein Wechsel zwischen der ersten (bzw. einer dritten) und zweiten (bzw. einer vierten) Messkonfiguration ermöglicht werden kann. Der Einfachheit halber kann im Rahmen der Erfindung (nur) Bezug genommen werden auf eine erste Messkonfiguration (z. B. für/eingerichtet ein Messen aus einem Seitenfenster) und eine zweite Messkonfiguration (z. B. eingerichtet/für ein Messen aus einem Heckfenster). Dies kann über ein Verstellen der Positioniereinheit und/oder durch einen Wechsel zwischen der ersten, zweiten, dritten und/oder vierten Schiene ermöglicht werden. Bei einem Wechsel zwischen den Schienen kann dabei vorzugsweise eine (fixierte) Konfiguration bzw. Einstellung der Positioniereinheit erhalten bleiben. Vorzugsweise kann ein Wechseln (jeweils) werkzeuglos ausgestaltet sein. Beispielsweise können die Positionsfixierungseinheit und/oder Unterteilfixiereinheit (jeweils) werkzeuglos und/oder handbetätigbar ausgestaltet sein, z. B. durch Ausführung als (Feststell-)Schraube mit einer Rändelmutter. Demnach können diese reversibel lösbar ausgestaltet sein. Somit kann schnell und/oder flexibel und/oder werkzeuglos eine Messkonfiguration eingestellt werden und/oder (flexibel) zwischen unterschiedlichen Messkonfigurationen gewählt werden.

Im Rahmen der Erfindung kann es von Vorteil sein, dass der Blitz reversibel lösbar, insbesondere werkzeuglos, über eine Blitzmontageeinheit, insbesondere wahlweise beabstandet von der ersten Seitenwand oder der zweiten Seitenwand der Messeinheit, anordenbar ist.

Demnach kann eine Anordnung, insbesondere Befestigung, des Blitzes neben, insbesondere rechts, links, oberhalb oder unterhalb der Messeinheit ermöglicht werden. Vorzugsweise kann das Oberteil, insbesondere die Messeinheit, beispielsweise an einem unteren Ende, eine Aufnahme aufweisen (z. B. in einem Aufnahmeblock, insbesondere aus Metall und/oder mit Loch), in welche die Blitzmontageeinheit reversibel lösbar eingeführt werden kann. Die Blitzmontageeinheit weist vorzugsweise (zumindest abschnittsweise) eine zu der Ausnehmung komplementäre Form auf. Beispielsweise kann die Aufnahme einen runden Querschnitt und/oder einen zylindrischen Hohlraum aufweisen, in welche die Blitzmontageeinheit, welche (zumindest abschnittsweise) zylindrisch ausgestaltet sein kann (z. B. als Stab), eingeführt werden kann. Dies kann eine Verstellbarkeit des Blitzes relativ zu der Messeinheit in allen drei Raumrichtungen ermöglichen, insbesondere ein Nicken des Blitzes relativ zu der Messeinheit. Alternativ kann es vorgesehen sein, dass die Ausnehmung nicht rund ist, insbesondere rechteckig (z. B. quadratisch). Dementsprechend kann eine Verstellbarkeit lediglich entlang einer Richtung, insbesondere entlang der Ausnehmung erfolgen. Dies kann die Komplexität reduzieren und/oder eine schnellere (De-) Montage ermöglichen. Vorzugsweise kann die Blitzmontageeinheit ein Fixiermittel aufweisen, über welches die Blitzmontageeinheit relativ zu der Messeinheit (in seiner Position) fixiert werden kann. Dadurch können sich die Messeinheit und der Blitz gemeinsam (quasi) als Baugruppe (bzw. Oberteil) bewegen, insbesondere relativ zu dem Unterteil und/oder der Basis (und damit dem Fahrzeug). Über die Blitzmontageeinheit kann der Blitz (gleichzeitig) reversibel lösbar an der Messeinheit angeordnet (befestigt) werden. Die Blitzmontageeinheit, insbesondere das Fixiermittel kann dabei eine werkzeuglose Befestigung aufweisen, insbesondere einen Schnellspanner oder eine Schraube mit einer Rändelmutter (welche handbetätigbar sein kann). Dadurch kann eine besonders einfache Verstellbarkeit und/oder (De-) Montage erfolgen. Es kann auch vorgesehen sein, dass die Blitzmontageeinheit, insbesondere das Fixiermittel, eine oder mehrere Schrauben aufweist, welche insbesondere durch ein Werkzeug lösbar und/oder befestigbar sein können. Dadurch kann eine einmal optimierte Einstellung (sehr lange) beibehalten werden und/oder nicht versehentlich gelöst werden (beispielsweise, wenn der Blitz relativ zu der Messeinheit eine optimale Ausrichtung eingenommen hat, kann diese Konfiguration fixiert werden und insbesondere nicht versehentlich per Hand gelöst werden). Der Blitz kann rigide mit der Blitzmontageeinheit verbunden sein, insbesondere befestigt (z. B. verschraubt). Dies ermöglicht eine rigide und/oder robuste Kombination aus Messeinheit und Blitz. Alternativ kann der Blitz mit der Blitzmontageeinheit über ein (eigenes) Kugelgelenk, insbesondere umfassend eine reversibel lösbare (werkzeuglos betätigbare) Feststellschraube, drehbar und/oder schwenkbar verbunden sein bzw. über Stativverstelleinheit verstellbar sein. Dadurch kann das Blitzlicht in unterschiedlichen Richtungen beeinflusst werden. Es kann auch vorgesehen sein, dass eine (zusätzliche) Drehachse (der Blitzmontageeinheit) vorgesehen ist, über welche der Blitz relativ zu der Messeinheit eine Nickbewegung durchführen kann. Dadurch kann die Richtung des Blitzes teilweise fixiert werden, was vorteilhafterweise die Bildqualität (insbesondere in der Praxis) verbessern kann (da keine Verstellung bezüglich der anderen Achsen erfolgt). Gleichzeitig kann über die Drehachse eine Feinjustierung des Blitzes dahingehend vorgenommen werden, dass Reflektionen (an der Innenseite eines Fahrzeugfensters) und/oder die Ausleuchtung des Objekts (entlang einer Vertikalrichtung) optimiert werden können.

Im Rahmen der Erfindung ist es denkbar, dass das Oberteil eine Abschirmung aufweist, welche reversibel lösbar, insbesondere werkzeuglos (z. B. eine Schraube mit Rändelmutter), über eine Abschirmungsmontageeinheit wahlweise anordenbar (angeordnet) ist
- zwischen der ersten Seitenwand und dem Blitz, oder
- zwischen der zweiten Seitenwand und dem Blitz.

Dadurch kann ein Übersprechen und/oder Reflektieren des Blitz(lichts), insbesondere direkt und/oder durch Reflektion an einer vor dem Blitz (und der Messeinheit) befindlichen (Heck- oder Seitenscheibe) reduziert werden. Dabei kann die Abschirmung dafür eingerichtet sein, die Messeinheit vor von dem Blitz emittierten Licht abzuschirmen. Die Abschirmung, kann wahlweise, reversibel lösbar und/oder flexibel anordenbar an und/oder neben der ersten Seitenwand der Messeinheit oder der zweiten Seitenwand der Messeinheit sein. Dadurch kann das Verkehrsüberwachungssystem (noch) besser an unterschiedliche Bauräume (z. B. Kofferräume bzw. Fahrzeuginnenräume) angepasst werden.

Es kann im Rahmen der Erfindung vorgesehen sein, dass das Unterteil, insbesondere an einem nach unten weisenden Boden (des Unterteils), eine Gegenschiene aufweist, über welche das Unterteil, und insbesondere dadurch das (mit diesem verbundene) Oberteil und/oder die Positioniereinheit, gemeinsam und/oder linear verstellbar ist.

Die Gegenschiene kann dafür eingerichtet sein, mit einer ersten, zweiten, dritten und/oder vierten Schiene reversibel lösbar, verstellbar, fixierbar und/oder (linear) beweglich ineinander zu greifen. Demnach kann, insbesondere bei einer gelösten bzw. gelockerten Unterteilfixiereinheit, das Unterteil (linear), relativ zu der Basis und/oder der Schiene, (linear) beweglich sein. Dabei kann vorzugsweise die Gegenschiene eine (zumindest abschnittsweise) komplementäre Form und/oder einen komplementären Querschnitt zu der ersten, zweiten, dritten und/oder vierten Schiene aufweisen. Die Gegenschiene kann an einer (untenliegenden) Platte des Unterteils angeordnet sein. Durch die Gegenschiene können das Unterteil, das Oberteil und/oder die Positioniereinheit gemeinsam relativ zu der ersten, zweiten, dritten und/oder vierten Schiene bewegt werden. So kann beispielsweise ein Wechsel zwischen unterschiedlichen Messkonfigurationen spezifisch sein für ein Anordnen in und/oder an einer ersten, zweiten, dritten und/oder vierten Schiene.

Es ist ferner denkbar, dass das Verkehrsüberwachungssystem eine (ganz unten angeordnete) Basis aufweist, welche (bezogen auf die Vertikalrichtung) unterhalb des Unterteils anordenbar (angeordnet) ist, wobei die Basis, insbesondere auf einer (entlang der Vertikalrichtung weisenden) Oberseite der Basis, eine erste Schiene und/oder vierte Schiene aufweist, welche insbesondere mit der Gegenschiene des Unterteils in Eingriff bringbar ist, um eine lineare Verstellbarkeit des Unterteils relativ zu der Basis insbesondere entlang einer Seitenrichtung (von rechts nach links) zu ermöglichen.

Die Basis kann bevorzugt eingerichtet sein, in einem Fahrzeug, z. B. dessen Kofferraum, angeordnet zu werden (siehe oben). Die Basis kann beispielsweise eine quaderförmige Form aufweisen. Beispielsweise kann die Basis zwei parallele und/oder horizontale Platten aufweisen, welche durch und/oder an einem (Aluminium-)Rahmen verbunden und/oder angeordnet sein können (welcher einen Innenraum der Basis für eine Transportkonfiguration bereitstellen kann). Dabei kann die erste und/oder vierte Schiene entlang und/oder parallel zu der Seitenrichtung orientiert sein und/oder eine Verstellbarkeit bereitstellen. Die erste und/oder vierte Schiene kann sich über die (gesamte) Breite der Basis, insbesondere entlang der Seitenrichtung, erstrecken. Alternativ kann es vorgesehen sein, dass die erste Schiene sich bezüglich der Longitudinalrichtung links (oder rechts) befindet und/oder die vierte Schiene sich bezüglich der Longitudinalrichtung rechts (oder links) befindet.

Auch ist es denkbar, dass das Verkehrsüberwachungssystem, insbesondere die Basis (auf deren Oberfläche), eine zweite Schiene und/oder dritte Schiene aufweist, welche insbesondere mit der Gegenschiene des Unterteils in Eingriff bringbar ist, um eine lineare Verstellbarkeit des Unterteils, insbesondere relativ zu der Basis, entlang und/oder entgegen einer Longitudinalrichtung zu ermöglichen, wobei insbesondere die zweite Schiene und/oder dritte Schiene (horizontal bzw. bezüglich einer Ebene senkrecht zur Vertikalen) senkrecht zu der ersten Schiene und/oder der vierten Schiene angeordnet sind.

Dabei kann die zweite und/oder dritte Schiene entlang und/oder parallel zu der Longitudinalrichtung orientiert sein und/oder eine Verstellbarkeit bereitstellen. Die zweite und/oder dritte Schiene kann sich über die (gesamte) Länge der Basis, insbesondere entlang der Longitudinalrichtung, erstrecken. Alternativ kann es vorgesehen sein, dass die zweite Schiene sich bezüglich der Seitenrichtung (in Fahrtrichtung) links (oder rechts) befindet und/oder die dritte Schiene sich bezüglich der Seitenrichtung (in Fahrtrichtung) rechts (oder links) befindet.

Die erste, zweite, dritte und/oder vierte Schiene können dabei eine quaderförmige Außenform aufweisen und/oder eine (oder mehrere parallele) gerade Einkerbung(en) bzw. Nut(en), in welcher insbesondere (zumindest teilweise) die Gegenschiene und/oder die Unterteilfixiereinheit (formschlüssig) aufgenommen werden kann /können.

Im Rahmen der Erfindung ist es optional möglich, dass
- die erste Schiene an und/oder auf der zweiten Schiene, oder
- die erste Schiene (welche sich vorzugsweise über die gesamte Breite der Basis erstreckt) an und/oder auf der zweiten Schiene und an und/oder auf der dritten Schiene, oder
- die erste Schiene an und/oder auf der zweiten Schiene und die vierte Schiene an und/oder auf der dritten Schiene,
verstellbar angeordnet ist.

Demnach können die Schienen relativ zueinander verstellbar sein. Dies kann es ermöglichen, dass das Unterteil relativ zu der Basis entlang der Longitudinalrichtung und der Seitenrichtung (gleichzeitig) verstellbar ist. Dies kann einen (besonders) einfachen Wechsel zwischen unterschiedlichen Messkonfigurationen bereitstellen. Es kann dabei vorgesehen sein, dass ein Wechsel möglich ist, ohne das Unterteil dabei von der Schiene zu lösen. Vorzugsweise kann das Unterteil und/oder die Gegenschiene und/oder die Unterteilfixiereinheit an der obersten (obenliegenden) Schiene angeordnet werden, während diese insbesondere relativ zu der oder den darunterliegenden Schiene(n) verstellbar ist. Hierfür können die untereinander und/oder übereinanderliegenden Schiene(n) jeweils zumindest teilweise eine komplementäre Form aufweisen, insbesondere in einem Bereich, in welchem diese aneinander grenzen. Beispielsweise kann die erste Schiene (an der Unterseite) eine Schienenverstelleinheit aufweisen, welche insbesondere (bezüglich Form und/oder Querschnitt) identisch zu der Gegenschiene ausgestaltet ist. Dadurch kann die erste Schiene auf und/oder in der zweiten Schiene und/oder dritten Schiene beweglich lagerbar / verstellbar sein. Hierfür kann / können ein oder mehrere (zusätzliche) Schienenfixiereinheit(en), welche(s) insbesondere ähnlich bzw. identisch zu der Unterteilfixiereinheit ausgestaltet sind, eine Fixierung der ersten an der zweiten und/oder dritten Schiene ermöglichen (wenn eine Positionierung abgeschlossen ist). Die Schienenfixiereinheit(en) kann / können demnach für ein kraftschlüssiges und/oder formschlüssiges Befestigen eingerichtet sein. Die Schienenfixiereinheit(en) kann / können beispielsweise handbetätigbar sein und insbesondere z. B. einen Schnellspanner oder eine Schraube mit Rändelmutter aufweisen.

Ferner kann es im Rahmen der Erfindung vorgesehen sein, dass das Unterteil eine Unterteilfixiereinheit aufweist, durch welche das Unterteil, insbesondere werkzeuglos, relativ zu der Basis und/oder ersten/zweiten/dritten/vierten Schiene reversibel lösbar fixierbar ist, wobei insbesondere die Unterteilfixiereinheit einen Kraftschluss der Gegenschiene mit der ersten Schiene, der zweiten Schiene, der dritten Schiene und/oder der vierten Schiene ermöglicht.

Demnach kann die Unterteilfixiereinheit an und/oder in der ersten Schiene, der zweiten Schiene, der dritten Schiene und/oder der vierten Schiene reversibel lösbar befestigt werden. Die
Unterteilfixiereinheit kann demnach für ein kraftschlüssiges und/oder formschlüssiges Befestigen eingerichtet sein. Dadurch kann eine Positionierung fixiert werden. Die Unterteilfixiereinheit kann handbetätigbar sein und insbesondere z. B. einen Schnellspanner oder eine Schraube mit Rändelmutter aufweisen.

In Bezug auf die vorliegende Erfindung ist es vorstellbar, dass die Basis einen (innenliegenden) Innenraum aufweist, in welcher das Oberteil, das Unterteil und die Positioniereinheit in einer Transportkonfiguration kraftschlüssig und/oder formschlüssig anordenbar sind.

Demnach kann die Basis vorzugsweise ein Schienensystem aufweisen, in welches das Oberteil, das Unterteil und die Positioniereinheit eingeschoben werden können. Vorzugsweise können das Oberteil, das Unterteil und die Positioniereinheit in einer Grundkonfiguration (über die Positioniereinheit) anordbar sein, welche insbesondere bei exakt (horizontal) waagrechter Ausrichtung der [Oberfläche der] Basis und/oder der Schiene, ebenfalls austariert ist und/oder (horizontal) waagrecht ausgerichtet ist. Vorzugsweise kann die Basis dafür eingerichtet sein das Oberteil, das Unterteil und die Positioniereinheit in der Grundkonfiguration formschlüssig aufzunehmen. Ein Kraftschluss kann beispielsweise über ein Verschlusselement erfolgen. Dieses kann reversibel lösbar sein. Das Verschlusselement kann handbetätigbar sein und insbesondere z. B. einen Schnellspanner oder eine Schraube mit Rändelmutter aufweisen. Vorzugsweise kann das Verschlusselement (zusätzlich) abschließbar sein, was insbesondere die Sicherheit (z. B. vor Diebstahl) erhöhen kann. Die Basis kann demnach, insbesondere durch Bereitstellen einer Transportkonfiguration, die Sicherheit (z. B. des Fahrers des Fahrzeugs und/oder des Verkehrsüberwachungssystems) erhöhen und/oder einen kompakten Transport ermöglichen.

Ferner ist es vorstellbar, dass das Verkehrsüberwachungssystem, insbesondere die Basis, eine (mechanische und/oder elektrische) Verstelleinheit (z. B. einen Elektromotor) aufweist, welche eingerichtet ist um eine, insbesondere lineare, horizontale Verstellbarkeit des Unterteils bereitzustellen, insbesondere
- relativ zu der Basis,
- entlang und/oder entgegen der Longitudinalrichtung, und/oder
- entlang und/oder entgegen der Seitenrichtung.

Horizontal kann dabei (im Rahmen der Erfindung) entlang der Longitudinalrichtung und/oder Seitenrichtung umfassen. Demnach kann die Verstelleinheit eine (lineare) Bewegung entlang der Longitudinalrichtung und/oder Seitenrichtung bereitstellen. Demnach kann eine erste Verstelleinheit für die Seitenrichtung und/oder eine zweite Verstelleinheit für die Longitudinalrichtung vorgesehen sein, beispielsweise durch einen ersten und/oder zweiten (elektrischen) Linearmotor, welcher insbesondere über ein elektrisches Netz und/oder eine Steuereinheit (des Fahrzeugs) betätigbar sein kann. Es kann vorgesehen sein, dass durch die Verstelleinheit das Unterteil relativ zu der ersten/zweiten/dritten/vierten Schiene verstellbar ist. Alternativ oder zusätzlich kann es vorgesehen sein, dass durch die Verstelleinheit die erste/zweite/dritte/vierte Schiene relativ zu der ersten/zweiten/dritten/vierten Schiene verstellbar ist. Beispielsweise kann es vorgesehen sein, dass (dadurch) die erste Schiene relativ zu der zweiten Schiene und/oder dritten Schiene verstellbar ist. Alternativ oder zusätzlich kann es vorgesehen sein, dass (dadurch) die vierte Schiene relativ zu der zweiten und/oder dritten Schiene verstellbar ist. Dies erlaubt es, insbesondere ohne (von außen) auffälliges Hantieren, einen Wechsel der Position durchzuführen. Es kann auch vorgesehen sein, dass über die Steuereinheit ein Wechsel programmiert wird.

Im Rahmen der Erfindung kann es von Vorteil sein, dass die Positioniereinheit dazu eingerichtet ist, das Oberteil relativ zu dem Unterteil um eine Vertikalrichtung, insbesondere um 90° und/oder über ein Kugelgelenk (bzw. über Stativverstelleinheit), zu drehen, wodurch ein Wechsel zwischen den zumindest zwei unterschiedlichen Messkonfigurationen durchführbar ist, wobei insbesondere dadurch realisierbar ist:
- eine erste Messkonfiguration entlang der Seitenrichtung (beispielsweise nach links oder rechts entlang der Fahrtrichtung), vorzugsweise (eingerichtet) für ein Messen aus einem Seitenfenster des Fahrzeugs, oder
- eine zweite Messkonfiguration entgegen (und/oder entlang) der Longitudinalrichtung/Fahrtrichtung (des Fahrzeugs), vorzugsweise (eingerichtet) für ein Messen aus einem Heckfenster des Fahrzeugs.

In der ersten Messkonfiguration kann das Oberteil, insbesondere die Messeinheit und/oder der Blitz, entlang einer Seitenrichtung und/oder aus einem (linken oder rechten) Seitenfenster des Fahrzeugs weisend orientiert sein. In der zweiten Messkonfiguration kann das Oberteil, insbesondere die Messeinheit und/oder der Blitz, entgegen (oder entlang) einer Longitudinalrichtung und/oder aus einem (hinteren) Heckfenster des Fahrzeugs weisend orientiert sein. Es kann vorgesehen sein, dass die Positioniereinheit eine Horizontalführung aufweist, durch welche ein vereinfachtes Verstellen um die Vertikalrichtung möglich ist. Die Positioniereinheit kann ein Kugelgelenk aufweisen. Alternativ oder zusätzlich kann die Positioniereinheit eine erste Positionierachse (parallel zur Longitudinalrichtung), eine zweite Positionierachse (parallel zur Seitenrichtung) und/oder eine dritte Positionierachse (parallel zur Vertikalrichtung) aufweisen, um welche jeweils eine Verstellbarkeit (unabhängig von den anderen Richtungen) isoliert ermöglicht wird. Dabei kann jeweils ein erstes, zweites und/oder drittes Fixiermittel die erste, zweite und/oder dritte Positionierachse fixieren. Dies kann ein schnelles Schwenken und/oder gezieltes Einstellen ermöglichen, insbesondere ohne andere Parameter bzw. Einstellungen negativ zu beeinflussen (z. B. ungewollt zu verändern) (Stativverstelleinheit).

Im Rahmen der Erfindung ist es denkbar, dass die Positioniereinheit, insbesondere durch ein Kugelgelenk (oder eine erste, zweite und/oder dritte Positionierachse), für ein Verschwenken und/oder Verdrehen des Oberteils relativ zu dem Unterteil, und insbesondere relativ zu der Longitudinalrichtung, der (dazu orthogonalen) Seitenrichtung und/oder der (dazu orthogonalen) Vertikalrichtung, eingerichtet ist.

Es kann im Rahmen der Erfindung vorgesehen sein, dass die Positioniereinheit eine Positionsfixierungseinheit aufweist, welche dazu eingerichtet ist, das Oberteil relativ zu dem Unterteil reversibel lösbar zu fixieren.

Demnach kann eine Beweglichkeit und/oder Verstellbarkeit der Positioniereinheit, insbesondere des Unterteils relativ zu dem Oberteil, durch die Positionsfixierungseinheit (reversibel lösbar) gehemmt und/oder verhindert werden. Vorzugsweise kann die Positionsfixierungseinheit werkzeuglos und/oder handbetätigbar sein, insbesondere kann diese einen Schnellspanner und/oder eine Kombination aus Schraube mit einer Rändelmutter aufweisen oder als solche ausgestaltet sein.

Es ist ferner denkbar, dass das Verkehrsüberwachungssystem, insbesondere die Basis (auf der nach oben weisenden Oberfläche), eine Gleiteinheit aufweist, auf welcher das Unterteil (zumindest abschnittsweise) gleitend gelagert ist, wobei insbesondere die Gleiteinheit zumindest abschnittsweise zwischen dem Unterteil und der (Oberfläche der) Basis anordenbar (angeordnet) ist, vorzugsweise zwischen der ersten Schiene, der zweiten Schiene, der dritten Schiene und/oder der vierten Schiene.

Dabei kann die Gleiteinheit eingerichtet sein ein Durchbiegen und/oder Durchhängen der ersten, zweiten, dritten und/oder vierten Schiene zu verhindern und/oder zu reduzieren, insbesondere indem diese durch die Gleiteinheit abgestützt werden. Beispielsweise kann die Gleiteinheit ein Metall aufweisen, z. B. Stahl (robust) oder Aluminium (leicht).

Die obenstehende Aufgabe wird gemäß einem zweiten Aspekt gelöst durch ein erfindungsgemäßes Fahrzeug aufweisend ein Verkehrsüberwachungssystem gemäß dem ersten Aspekt, wobei das Verkehrsüberwachungssystem zur Überwachung einer Verkehrsszene in (bzw. von) einem Innenraum des Fahrzeugs (aus) angeordnet ist.

Damit ergeben sich in Bezug auf ein erfindungsgemäßes Fahrzeug die gleichen Vorteile, wie sie bereits in Bezug auf ein erfindungsgemäßes Verkehrsüberwachungssystem beschrieben worden sind.

Vorgesehen sein, kann zudem ein Verfahren (insbesondere gemäß einem dritten Aspekt) zur Überwachung einer Verkehrsszene, aufweisend zumindest einen der folgenden Schritte:
- Anordnen eines Verkehrsüberwachungssystems gemäß dem ersten Aspekt in einem Fahrzeug, insbesondere in einem Innenraum des Fahrzeugs, gemäß dem zweiten Aspekt, und/oder
- Ausrichten des Oberteils des Verkehrsüberwachungssystems (insbesondere über die Positioniereinheit und/oder ein Anordnen an einer Schiene) derart, dass ein Messen zumindest eines Parameters eines vorbeifahrenden Fahrzeugs ermöglicht wird, und/oder
- Verstellen, insbesondere Austarieren (vorzugsweise waagerecht stellen bezüglich der Longitudinalrichtung und/oder Seitenrichtung), des Oberteils relativ zu dem Unterteil durch die Positioniereinheit, wodurch insbesondere das Oberteil, vorzugsweise die Messeinheit, im Wesentlichen horizontal ausgerichtet wird, insbesondere entlang der Longitudinalrichtung und/oder Seitenrichtung, und/oder
- (wiederholtes) Messen, durch die Messeinheit des zumindest einen Parameters des vorbeifahrenden Fahrzeugs, und/oder
- Verstellen des Verkehrsüberwachungssystems durch die Positioniereinheit, welche zwischen dem Oberteil und dem Unterteil angeordnet ist, wobei das Oberteil relativ zu dem Unterteil durch die Positioniereinheit verstellt wird, wodurch zwischen zumindest zwei unterschiedlichen Messkonfigurationen zum Messen gewechselt wird, und/oder
- Wechseln zwischen zwei unterschiedlichen Messkonfigurationen durch (reversibel lösbares) Lösen von einer ersten und/oder vierten Schiene und anschließendes Anordnen an einer zweiten und/oder dritten Schiene (oder umgekehrt), und/oder
- **Verstellen** des Verkehrsüberwachungssystems, insbesondere des Oberteils, der Positioniereinheit und/oder des Unterteils relativ zu der Basis, insbesondere über die erste, zweite, dritte und/oder vierte Schiene, wodurch insbesondere das Oberteil
   ∘ Näher an einer Seitenscheibe des Fahrzeugs, insbesondere in einer ersten Messkonfiguration, und/oder
   ∘ Näher an einer Heckscheibe des Fahrzeugs, insbesondere in einer zweiten Messkonfiguration anordenbar ist.

Damit können sich in Bezug auf ein Verfahren (gemäß einem dritten Aspekt) die gleichen Vorteile ergeben, wie sie bereits in Bezug auf ein erfindungsgemäßes Verkehrsüberwachungssystem und/oder ein erfindungsgemäßes Fahrzeug beschrieben worden sind.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Dabei zeigen beispielhaft
- Figur 1: ein Verkehrsüberwachungssystem,
- Figur 2: ein Verkehrsüberwachungssystem,
- Figur 3: ein Verkehrsüberwachungssystem,
- Figur 4: ein Verkehrsüberwachungssystem,
- Figur 5: ein Verkehrsüberwachungssystem,
- Figur 6: ein Verkehrsüberwachungssystem,
- Figur 7: ein Fahrzeug.

In den Figuren werden für die gleichen technischen Merkmale, auch von unterschiedlichen Ausführungsbeispielen, die identischen Bezugszeichen verwendet. Dabei kann zu Anschauungszwecken jeweils eine Longitudinalrichtung x (z. B. Fahrtrichtung des Fahrzeugs), eine (dazu senkrechte) Seitenrichtung y (von links nach rechts im Fahrzeug entlang der Fahrtrichtung) und eine (zu beiden senkrechte) Vertikalrichtung z (vom Boden nach oben) dargestellt sein.

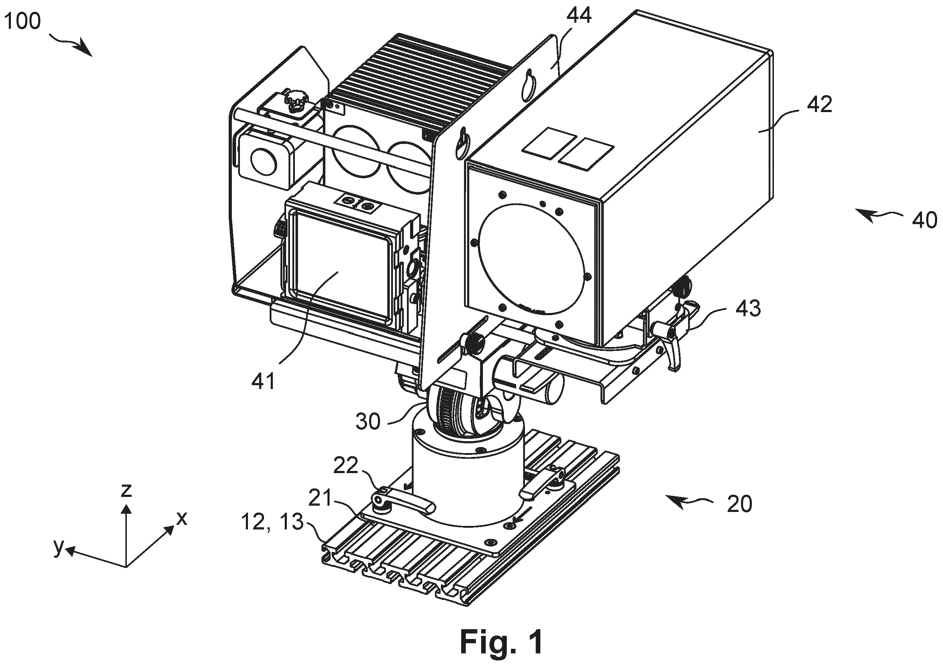

Fig. 1 zeigt ein Verkehrsüberwachungssystem 100 zur Überwachung einer Verkehrsszene, vorzugsweise von einem Innenraum eines Fahrzeugs 200 aus, aufweisend:
- ein Oberteil 40 umfassend
   ∘ eine Messeinheit 41, welche eingerichtet ist zum Messen zumindest eines Parameters eines Objekts, insbesondere eines vorbeifahrenden Fahrzeugs,
   ∘ einen Blitz 42 der beabstandet von einer ersten Seitenwand 41.1 oder einer zweiten Seitenwand 41.2 der Messeinheit 41 anordenbar ist,
- ein Unterteil 20, das / welches unterhalb des Oberteils 40 angeordnet ist,
- eine Positioniereinheit 30, welche zwischen dem Oberteil 40 und dem Unterteil 20 angeordnet ist, wobei das Oberteil 40 relativ zu dem Unterteil 20 durch die Positioniereinheit 30 verstellbar ist, wodurch zumindest zwei unterschiedliche Messkonfigurationen I, II zum Messen bereitgestellt werden.

Im Rahmen der Erfindung kann es von Vorteil sein, dass der Blitz 42 reversibel lösbar, insbesondere werkzeuglos, über eine Blitzmontageeinheit 43 wahlweise beabstandet von der ersten Seitenwand 41.1 oder der zweiten Seitenwand 41.2 der Messeinheit 41 anordenbar ist.

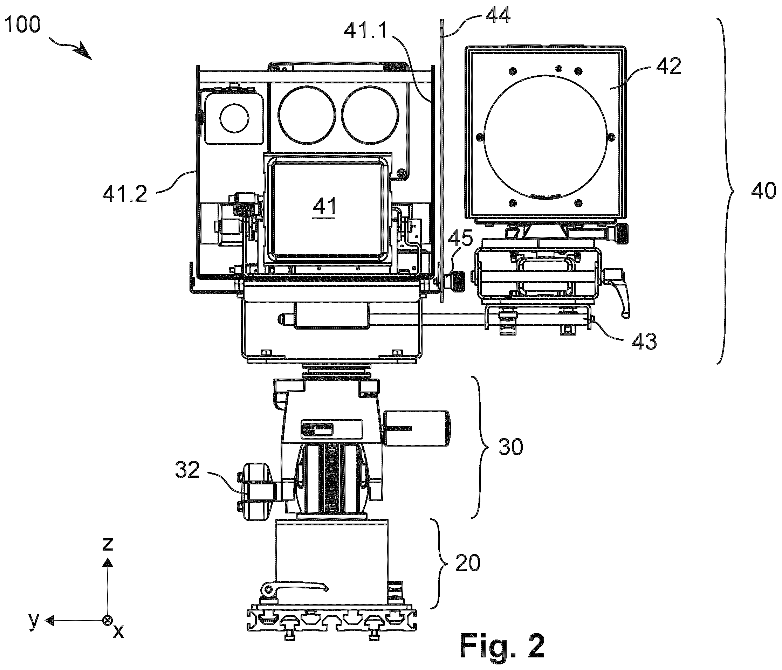

Wie insbesondere Fig. 2 zeigt, kann es im Rahmen der Erfindung vorgesehen sein, dass das Oberteil 40 eine Abschirmung 44 aufweist, welche reversibel lösbar, insbesondere werkzeuglos, über eine Abschirmungsmontageeinheit 45 wahlweise anordenbar ist
- zwischen der ersten Seitenwand 41.1 und dem Blitz 42, oder
- zwischen der zweiten Seitenwand 41.2 und dem Blitz 42.

Es kann im Rahmen der Erfindung vorgesehen sein, dass das Unterteil 20, insbesondere an einem nach unten weisenden Boden, eine Gegenschiene 21 aufweist, über welche das Unterteil 20, und insbesondere dadurch das Oberteil 40, linear verstellbar ist.

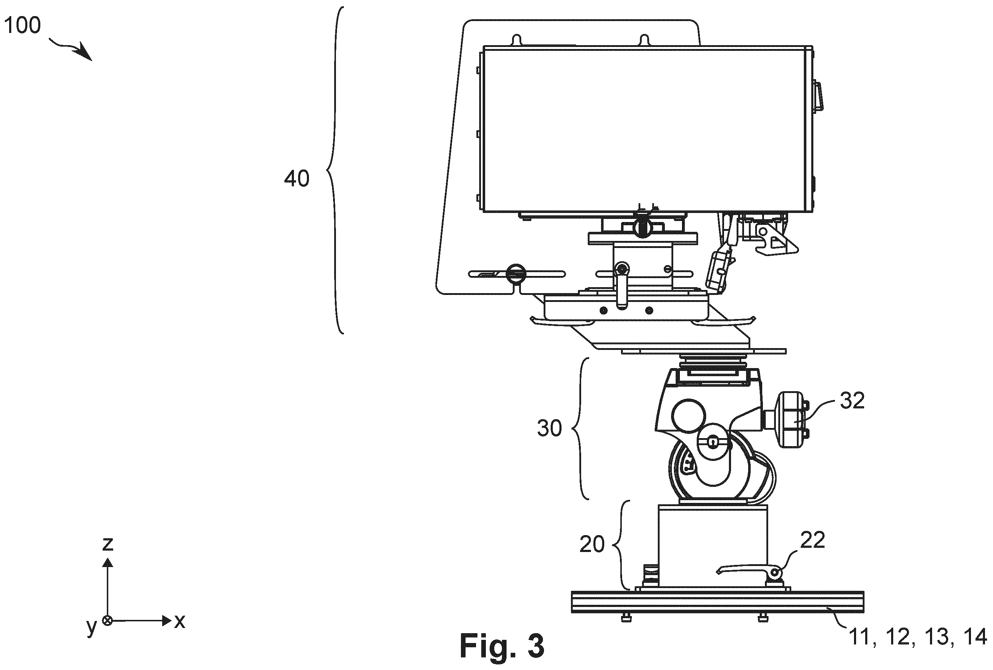

Wie Fig. 3 zeigt, kann es im Rahmen der Erfindung vorgesehen sein, dass das Unterteil 20 eine Unterteilfixiereinheit 22 aufweist, durch welche das Unterteil 20, insbesondere werkzeuglos, relativ zu der Basis 10 reversibel lösbar fixierbar ist, wobei insbesondere die Unterteilfixiereinheit 22 einen Kraftschluss der Gegenschiene 21 mit der ersten Schiene 11, der zweiten Schiene 12, der dritten Schiene 13 und/oder der vierten Schiene 14 ermöglicht.

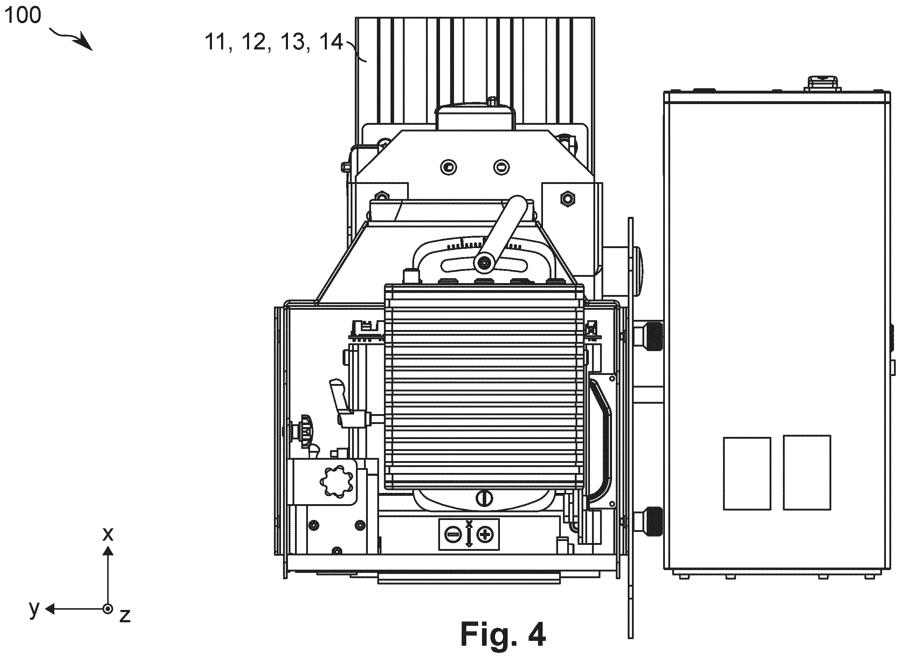

Fig. 4 zeigt ein Verkehrsüberwachungssystem 100 in Draufsicht (entgegen einer Vertikalrichtung). Dabei können das Unterteil 20, die Positioniereinheit 30 und das Oberteil 10 (gemeinsam) relativ zu der ersten Schiene 11, der zweiten Schiene 12, der dritten Schiene 13 und/oder der vierten Schiene 14 (je nachdem an welcher eine Anordnung erfolgt ist) verstellbar sein. Über das Unterteilfixiereinheit 22 kann eine Fixierbarkeit bereitgestellt werden.

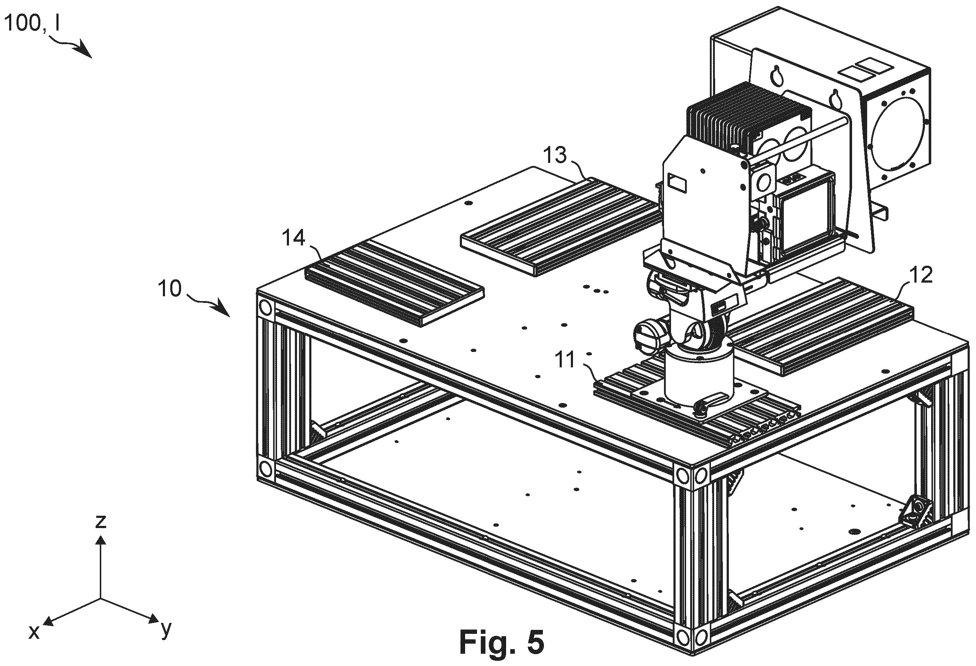

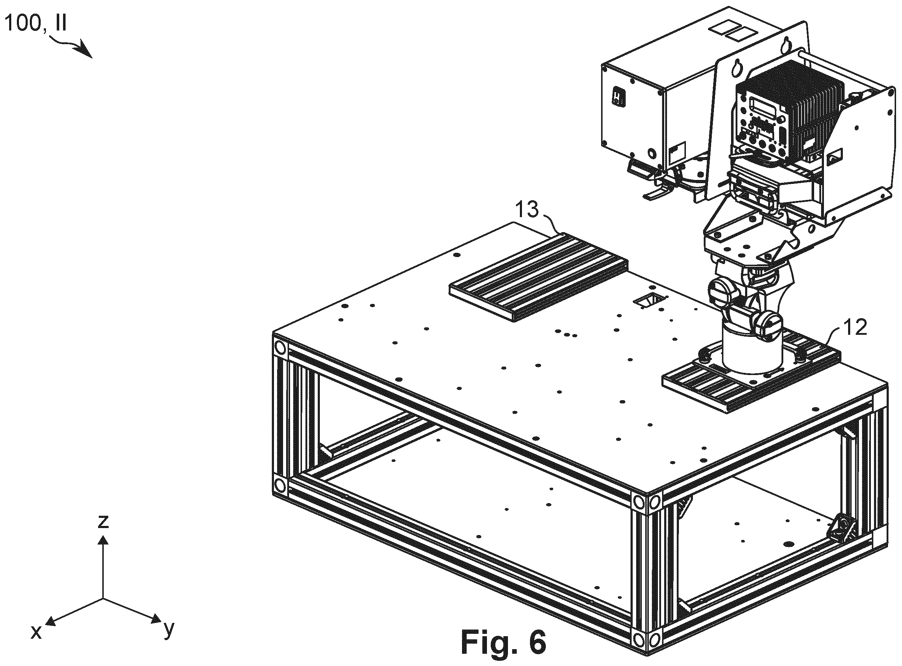

Wie Fig. 5 und 6 zeigen, ist es ferner denkbar, dass das Verkehrsüberwachungssystem 100 eine Basis 10 aufweist, welche unterhalb des Unterteils 20 anordenbar ist, wobei die Basis 10, insbesondere auf einer Oberseite der Basis 10, eine erste Schiene 11 und/oder vierte Schiene 14 aufweist, welche insbesondere mit der Gegenschiene 21 des Unterteils 20 in Eingriff bringbar ist, um eine lineare Verstellbarkeit des Unterteils 20 relativ zu der Basis 10 insbesondere entlang einer Seitenrichtung y zu ermöglichen.

Wie insbesondere Fig. 6 zeigt, ist es denkbar, dass das Verkehrsüberwachungssystem 100, insbesondere die Basis 10, eine zweite Schiene 12 und/oder dritte Schiene 13 aufweist, welche insbesondere mit der Gegenschiene 21 des Unterteils 20 in Eingriff bringbar ist, um eine lineare Verstellbarkeit des Unterteils 20, insbesondere relativ zu der Basis 10, entlang einer Longitudinalrichtung x zu ermöglichen, wobei insbesondere die zweite Schiene 12 und/oder dritte Schiene 13 senkrecht zu der ersten Schiene 11 und/oder vierten Schiene 14 angeordnet sind.

Im Rahmen der Erfindung ist es optional möglich, dass
- die erste Schiene 11 an der zweiten Schiene 12,
- oder die erste Schiene 11 an der zweiten Schiene 12 und an der dritten Schiene 13, oder
- die erste Schiene 11 an der zweiten Schiene 12 und die vierte Schiene 14 an der dritten Schiene 13,
verstellbar angeordnet ist oder eine Schiene Verwendung findet, welche sowohl Führungsnuten in x- und in y-Richtung aufweist.

In Bezug auf die vorliegende Erfindung ist es vorstellbar, dass die Basis 10 einen (z. B. quaderförmigen) Innenraum aufweist, in welcher das Oberteil 40, das Unterteil 20 und die Positioniereinheit 30 in einer Transportkonfiguration kraftschlüssig und/oder formschlüssig anordenbar sind. Der Innenraum kann in Fig. 5 und 6 durch die parallelen Platten und/oder den (Aluminium-) Rahmen begrenzt und/oder definiert sein.

Ferner ist es vorstellbar, dass das Verkehrsüberwachungssystem 100, insbesondere die Basis 10, eine Verstelleinheit (z. B. einen Linearmotor) aufweist, welche eingerichtet ist um eine, insbesondere lineare, horizontale Verstellbarkeit des Unterteils 20 bereitzustellen, insbesondere
- relativ zu der Basis 10,
- entlang der Longitudinalrichtung x, und/oder
- entlang der Seitenrichtung y.

Im Rahmen der Erfindung kann es von Vorteil sein, dass die Positioniereinheit 30 dazu eingerichtet ist, das Oberteil 40 relativ zu dem Unterteil 20 um eine Vertikalrichtung z, insbesondere um 90° und/oder über ein Kugelgelenk, zu drehen, wodurch ein Wechsel zwischen den zumindest zwei unterschiedlichen Messkonfigurationen I,II durchführbar ist, wobei insbesondere dadurch realisierbar ist:
- eine erste Messkonfiguration I (vgl. Fig. 5) entlang der Seitenrichtung y, vorzugsweise aus einem Seitenfenster des Fahrzeugs 200, oder
- eine zweite Messkonfiguration II (vgl. Fig. 6) entgegen der Longitudinalrichtung x, vorzugsweise aus einem Heckfenster des Fahrzeugs 200.

Alternativ oder zusätzlich kann es vorgesehen sein, dass die erste Messkonfiguration I (vgl. Fig. 5) eingenommen wird, indem das Unterteil 20 an einer ersten Schiene 11 (oder vierten Schiene 14) angeordnet wird. Dies kann auch als dritte Messkonfiguration bezeichnet werden, da es insbesondere vorgesehen sein kann, dass das Unterteil 20 relativ zu dem Oberteil 40 bei einem Wechsel zwischen der ersten Messkonfiguration I und der zweiten Messkonfiguration II unverändert bleibt.

Alternativ oder zusätzlich kann es vorgesehen sein, dass die zweite Messkonfiguration II (vgl. Fig. 6) eingenommen wird, indem das Unterteil 20 an einer zweiten Schiene 12 (oder dritten Schiene 13) angeordnet wird. Dies kann auch als vierte Messkonfiguration bezeichnet werden, da es insbesondere vorgesehen sein kann, dass das Unterteil 20 relativ zu dem Oberteil 40 bei einem Wechsel zwischen der ersten (bzw. dritten) Messkonfiguration I und der zweiten (bzw. vierten) Messkonfiguration II unverändert bleibt.

Im Rahmen der Erfindung ist es denkbar, dass die Positioniereinheit 30, insbesondere durch ein Kugelgelenk, für ein Verschwenken und/oder Verdrehen des Oberteils 40 relativ zu dem Unterteil 20, und insbesondere relativ zu der Longitudinalrichtung x, der Seitenrichtung y und/oder der Vertikalrichtung z, eingerichtet ist. In Kombination mit unterschiedlich langen Hebeln (nicht dargestellt) und Federn bzw. Gegengewichten kann eine Verstellung zwischen Oberteil und Unterteil stets im stabilen Gleichgewicht in x-, y-, z-Richtung auch freibeweglich (stufenlos oder in Stufen der Messkonfiguration/Messposition I und II) ohne Schienen im Innenraum des Fahrzeugs 200 erfolgen. Gleiche Verstellung zwischen Oberteil und Unterteil wäre durch einen Roboterarm motorisch stufenlos oder in Stufen der Messkonfiguration/Messposition I und II ausführbar.

Es kann im Rahmen der Erfindung vorgesehen sein, dass die Positioniereinheit 30 eine Positionsfixierungseinheit 32 aufweist, welche dazu eingerichtet ist, das Oberteil 40 relativ zu dem Unterteil 20 reversibel lösbar zu fixieren.

Es ist ferner denkbar, dass das Verkehrsüberwachungssystem 100, insbesondere die Basis 10, eine Gleiteinheit aufweist, auf welcher das Unterteil 20 gleitend gelagert ist, wobei insbesondere die Gleiteinheit, zumindest abschnittsweise, zwischen dem Unterteil 20 und der Basis 10 anordenbar ist, vorzugsweise zwischen der ersten Schiene 11, der zweiten Schiene 12, der dritten Schiene 13 und/oder der vierten Schiene 14.

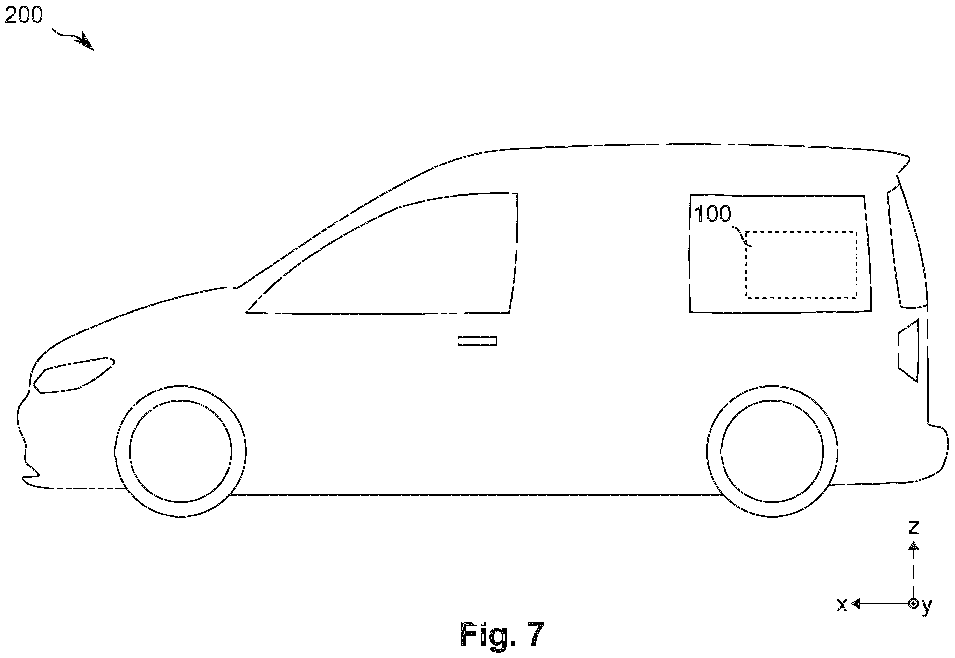

Fig. 7 zeigt ein erfindungsgemäßes Fahrzeug 200 aufweisend ein Verkehrsüberwachungssystem 100 gemäß dem ersten Aspekt und/oder gemäß einer der Fig. 1 bis Fig. 6, wobei das Verkehrsüberwachungssystem 100 zur Überwachung einer Verkehrsszene in einem Innenraum des Fahrzeugs 200, z. B. im Kofferraum, angeordnet ist. Dabei kann das Verkehrsüberwachungssystem 100 das Messen in zumindest zwei Messkonfigurationen I, II ermöglichen, beispielsweise gemäß einer ersten Messkonfiguration I aus dem Seitenfenster (aus der Bildebene) und gemäß einer zweiten Messkonfiguration II aus dem Heckfenster (nach rechts).

### Bezugszeichenliste

- 10: Basis
- 11: erste Schiene
- 12: zweite Schiene
- 13: dritte Schiene
- 14: vierte Schiene
- 20: Unterteil
- 21: Gegenschiene
- 22: Unterteilfixiereinheit
- 30: Positioniereinheit
- 32: Positionsfixierungseinheit
- 40: Oberteil
- 41: Messeinheit
- 41.1: erste Seitenwand
- 41.2: zweite Seitenwand
- 42: Blitz
- 43: Blitzmontageeinheit
- 44: Abschirmung
- 45: Abschirmungsmontageeinheit
- 100: Verkehrsüberwachungssystem
- 200: Fahrzeug
- I, II: Messkonfigurationen
- I: erste Messkonfiguration
- II: zweite Messkonfiguration
- x: Longitudinalrichtung
- y: Seitenrichtung
- z: Vertikalrichtung

## Patentansprüche

1. Verkehrsüberwachungssystem (100) zur Überwachung einer Verkehrsszene, vorzugsweise von einem Innenraum eines Fahrzeugs (200) aus, aufweisend:
- ein Oberteil (40) umfassend
∘ eine Messeinheit (41), welche eingerichtet ist zum Messen zumindest eines Parameters eines Objekts, insbesondere eines vorbeifahrenden Fahrzeugs,
∘ einen Blitz (42), der beabstandet von einer ersten Seitenwand (41.1) oder einer zweiten Seitenwand (41.2) der Messeinheit (41) anordenbar ist,
- ein Unterteil (20), das unterhalb des Oberteils (40) angeordnet ist,
- eine Positioniereinheit (30), welche zwischen dem Oberteil (40) und dem Unterteil (20) angeordnet ist, wobei das Oberteil (40) relativ zu dem Unterteil (20) durch die Positioniereinheit (30) verstellbar ist, wodurch zumindest zwei unterschiedliche Messkonfigurationen (I, II) zum Messen bereitgestellt werden.

2. Verkehrsüberwachungssystem (100) nach Anspruch 1,
**dadurch gekennzeichnet,**
**dass** der Blitz (42) reversibel lösbar, insbesondere werkzeuglos, über eine Blitzmontageeinheit (43) wahlweise beabstandet von der ersten Seitenwand (41.1) oder der zweiten Seitenwand (41.2) der Messeinheit (41) anordenbar ist.

3. Verkehrsüberwachungssystem (100) nach Anspruch 1 oder 2,
**dadurch gekennzeichnet,**
**dass** das Oberteil (40) eine Abschirmung (44) aufweist, welche reversibel lösbar, insbesondere werkzeuglos, über eine Abschirmungsmontageeinheit (45) wahlweise anordenbar ist
- zwischen der ersten Seitenwand (41.1) und dem Blitz (42), oder
- zwischen der zweiten Seitenwand (41.2) und dem Blitz (42).

4. Verkehrsüberwachungssystem (100) nach einem der vorhergehenden Ansprüche, **dadurch gekennzeichnet,**
**dass** das Unterteil (20), insbesondere an einem nach unten weisenden Boden, eine Gegenschiene (21) aufweist, über welche das Unterteil (20), und insbesondere dadurch das Oberteil (40), linear verstellbar ist.

5. Verkehrsüberwachungssystem (100) nach einem der vorhergehenden Ansprüche, **dadurch gekennzeichnet,**
**dass** das Verkehrsüberwachungssystem (100) eine Basis (10) aufweist, welche unterhalb des Unterteils (20) anordenbar ist, wobei die Basis (10), insbesondere auf einer Oberseite der Basis (10), eine erste Schiene (11) und/oder vierte Schiene (14) aufweist, welche insbesondere mit der Gegenschiene (21) des Unterteils (20) in Eingriff bringbar ist, um eine lineare Verstellbarkeit des Unterteils (20) relativ zu der Basis (10), insbesondere entlang einer Seitenrichtung (y), zu ermöglichen.

6. Verkehrsüberwachungssystem (100) nach einem der vorhergehenden Ansprüche, **dadurch gekennzeichnet,**
**dass** das Verkehrsüberwachungssystem (100), insbesondere die Basis (10), eine zweite Schiene (12) und/oder dritte Schiene (13) aufweist, welche insbesondere mit der Gegenschiene (21) des Unterteils (20) in Eingriff bringbar ist, um eine lineare Verstellbarkeit des Unterteils (20), insbesondere relativ zu der Basis (10), entlang einer Longitudinalrichtung (x) zu ermöglichen, wobei insbesondere die zweite Schiene (12) und/oder dritte Schiene (13) senkrecht zu der ersten Schiene (11) und/oder vierten Schiene (14) angeordnet sind.

7. Verkehrsüberwachungssystem (100) nach den vorhergehenden Ansprüchen 5 und 6, **dadurch gekennzeichnet,**
**dass**
- die erste Schiene (11) an der zweiten Schiene (12), oder
- die erste Schiene (11) an der zweiten Schiene (12) und an der dritten Schiene (13), oder
- die erste Schiene (11) an der zweiten Schiene (12) und die vierte Schiene (14) an
der dritten Schiene (13),
verstellbar angeordnet ist.

8. Verkehrsüberwachungssystem (100) nach dem vorhergehenden Anspruch 5 oder 6, **dadurch gekennzeichnet,**
**dass** das Unterteil (20) eine Unterteilfixiereinheit (22) aufweist, durch welche das Unterteil (20), insbesondere werkzeuglos, relativ zu der Basis (10) reversibel lösbar fixierbar ist, wobei insbesondere die Unterteilfixiereinheit (22) einen Kraftschluss der Gegenschiene (21) mit der ersten Schiene (11), der zweiten Schiene (12), der dritten Schiene (13) und/oder der vierten Schiene (14) ermöglicht.

9. Verkehrsüberwachungssystem (100) nach dem vorhergehenden Anspruch 5, **dadurch gekennzeichnet,**
**dass** die Basis (10) einen Innenraum aufweist, in welcher das Oberteil (40), das Unterteil (20) und die Positioniereinheit (30) in einer Transportkonfiguration kraftschlüssig und/oder formschlüssig anordenbar sind.

10. Verkehrsüberwachungssystem (100) nach einem der vorhergehenden Ansprüche 5 bis 9,
**dadurch gekennzeichnet,**
**dass** das Verkehrsüberwachungssystem (100), insbesondere die Basis (10), eine Verstelleinheit aufweist, welche eingerichtet ist um eine, insbesondere lineare, horizontale Verstellbarkeit des Unterteils (20) bereitzustellen, insbesondere
- relativ zu der Basis (10),
- entlang der Longitudinalrichtung (x), und/oder
- entlang der Seitenrichtung (y).

11. Verkehrsüberwachungssystem (100) nach einem der vorhergehenden Ansprüche, **dadurch gekennzeichnet,**
**dass** die Positioniereinheit (30) dazu eingerichtet ist, das Oberteil (40) relativ zu dem Unterteil (20) um eine Vertikalrichtung (z), insbesondere um 90° und/oder über ein Kugelgelenk, zu drehen, wodurch ein Wechsel zwischen den zumindest zwei unterschiedlichen Messkonfigurationen (I,II) durchführbar ist, wobei insbesondere dadurch realisierbar ist:
- eine erste Messkonfiguration (I) entlang der Seitenrichtung (y), vorzugsweise für ein Messen aus einem Seitenfenster des Fahrzeugs (200), oder
- eine zweite Messkonfiguration (II) entgegen der Longitudinalrichtung (x), vorzugsweise für ein Messen aus einem Heckfenster des Fahrzeugs (200).

12. Verkehrsüberwachungssystem (100) nach einem der vorhergehenden Ansprüche, **dadurch gekennzeichnet,**
**dass** die Positioniereinheit (30), insbesondere durch ein Kugelgelenk, für ein Verschwenken und/oder Verdrehen des Oberteils (40) relativ zu dem Unterteil (20), und insbesondere relativ zu der Longitudinalrichtung (x), der Seitenrichtung (y) und/oder der Vertikalrichtung (z), eingerichtet ist.

13. Verkehrsüberwachungssystem (100) nach einem der vorhergehenden Ansprüche, **dadurch gekennzeichnet,**
**dass** die Positioniereinheit (30) eine Positionsfixierungseinheit (32) aufweist, welche dazu eingerichtet ist, das Oberteil (40) relativ zu dem Unterteil (20) reversibel lösbar zu fixieren.

14. Verkehrsüberwachungssystem (100) nach einem der vorhergehenden Ansprüche, **dadurch gekennzeichnet,**
**dass** das Verkehrsüberwachungssystem (100), insbesondere die Basis (10), eine Gleiteinheit aufweist, auf welcher das Unterteil (20) gleitend gelagert ist, wobei insbesondere die Gleiteinheit zumindest abschnittsweise zwischen dem Unterteil (20) und der Basis (10) anordenbar ist, vorzugsweise zwischen der ersten Schiene (11), der zweiten Schiene (12), der dritten Schiene (13) und/oder der vierten Schiene (14).

15. Fahrzeug (200) aufweisend ein Verkehrsüberwachungssystem (100) nach einem der vorhergehenden Ansprüche, wobei das Verkehrsüberwachungssystem (100) zur Überwachung einer Verkehrsszene in einem Innenraum des Fahrzeugs (200) angeordnet ist.
